Europäisches Patentamt

**European Patent Office** (11) Veröffentlichungsnummer: **0 195 191**

**Office européen des brevets** **B1**

(12) **EUROPÄISCHE PATENTSCHRIFT**

(45) Veröffentlichungstag der Patentschrift: (51) Int. Cl.⁴: **G 05 D 1/02**
06.12.89

(21) Anmeldenummer: **86100908.2**

(22) Anmeldetag: **23.01.86**

(54) **Passivspur-System zur Führung und Steuerung von fahrerlosen Transport- und Montageeinheiten.**

(30) Priorität: **15.03.85 CH 1173/85**

(43) Veröffentlichungstag der Anmeldung:
**24.09.86 Patentblatt 86/39**

(45) Bekanntmachung des Hinweises auf die Patenterteilung:
**06.12.89 Patentblatt 89/49**

(84) Benannte Vertragsstaaten:
**AT BE CH DE FR GB IT LI NL SE**

(56) Entgegenhaltungen:
**EP-A-0 012 554**
**DE-A-2 459 358**
**FR-A-2 406 245**
**US-A-4 139 862**

**PROCEEDINGS OF THE 4TH INTERNATIONAL
SYMPOSIUM ON INDUSTRIAL ROBOTS, Tokyo,
JP, 19. - 21. November 1974, Seiten 385-393, Japan
Industrial Robot Association, Tokyo, JP; S. ANDO
et al.: "Unattended travelling vehicle guided by
optical means"**

(73) Patentinhaber: **JD- Technologie AG, c/o Gestinor
Services AG Chamerstrasse 50, CH- 6300 Zug (CH)**

(72) Erfinder: **Bögli, Peter, Dipl.El.- Ing. ETH,
Mattenweg 1, CH- 2557 Studen (CH)**

(74) Vertreter: **Monsch, René, E. BLUM & CO.,
Patentanwälte Vorderberg 11, CH- 8044 Zürich
(CH)**

EP 0 195 191 B1

**Beschreibung**

Die vorliegende Erfindung betrifft ein Passivspur-Anordnung zur Führung und Steuerung von fahrerlosen Transport- und Montageeinheiten, insbesondere Flurförderzeugen, enthaltend eine als Leitlinie am Boden angebrachte Passivspur mit mindestens einem von der übrigen Fahrbahn unterschiedlichen Merkmal sowie eine fahrzeuggestützte Abtastvorrichtung zur Verfolgung der Passivspur.

Solche Passivspur-Systeme sind allgemein anwendbar, wenn es darum geht, fahrbare Objekte entlang einer Leitlinie zu führen und die Flexibilität gleisloser Fördereinrichtungen optimal zu nutzen, wie z. B. beim Aufbau und Betrieb flexibler Fertigungssysteme.

Der bisherige Stand der Technik bei der Führung von fahrerlosen Transporteinheiten ist einerseits gekennzeichnet durch die weitverbreitete Verwendung von induktiven Schleifen, die im Boden elektrisch isoliert verlegt sind und von einem niederfrequenten Wechselstrom durchflossen werden. Die Verlegung solcher Schleifen in Boden ist aufwendig und die Flexibilität, die gleislosen Fahrzeugen eigen ist, wird damit auch schlecht ausgenützt, da eine derart im Boden eingebaute Führungslinie nicht kurzfristig und auch nicht ohne Störung der Umgebung in ihrem Verlaufe geändert werden kann. Es sind deshalb schon seit längerer Zeit Führungssysteme bekannt, die passive, also nicht stromdurchflossene Leitlinien benützen. Solche passive Leitlinien sind ohne elektrische Isolation direkt an der Bodenoberfläche angebracht, so dass sie jederzeit auch wieder leicht und rasch entfernt werden können. Die vorliegende Erfindung ist auf ein Fahrzeugführsystem mit passiver Leitlinie gerichtet, wie es zum Beispiel aus DE-A-2 459 358, FR-A-2 406 245 oder DE-A-2 949 204 bekannt ist. Die beiden zuseht erwähnten Passivspur-Führsysteme arbeiten nach dem Prinzip des Helligkeitsgleichgewichtes und verwenden als Leitlinie ein helles Band. Vom Fahrzeug ausgesendetes Licht wird am hellen Band reflektiert und von zwei fahrzeuggestützten Lichtsensoren empfangen, die je ein Signal erzeugen, das proportional zur mittleren Helligkeit innerhalb gleichgrosser zugehöriger Messfenster ist. Liefert nun der erste Lichtsensor über dem zugehörigen Messfenster ein grösseres Signal als der zweite Lichtsensor über seinem Messfenster, wird die seitliche Spurlage des Fahrzeuges bezüglich des hellen Bandes so korrigiert, dass beide Messfenster die gleiche mittlere Helligkeit aufweisen und das Helligkeitsgleichgewicht somit wieder hergestellt ist.

So einfach dieses Spurführsystem ist, so haften ihm doch eine Reihe von Nachteilen an: Vorerst ist die Empfindlichkeit des Systems eine Funktion des Kontrastes.

Aus diesem Grunde muss ein möglichst hoher und vor allem konstanter Kontrast an den Spurkanten gesichert sein, sollen Stabilitätsprobleme im Lenk-Regelkreis vermieden werden. Auf die beidseits des hellen Bandes vorgesehenen dunklen Seitenbänder kann deshalb kann verzichtet werden (vergl. DE-A-2 949 204), was eine derart gestaltete Passivspur verteuert und deren Auslegung zu einem Wegnetz erschwert. Weitere Nachteile ergeben sich aus dem Umstande, dass dieses Spurführsystem ausserordentlich stark auf Verschmutzung reagiert, dies zum einen wegen der damit verbundenen Kontrastreduktion, zum anderen aber wegen der integralen Erfassung eines Helligkeitsmittelwertes im Gegensatz zu einem Kantentracking. Insbesondere führen die im allgemeinen zu erwartenden unsymmetrischen Verschmutzungswerte unmittelbar zu einem unkontrollierbaren Offset. Auch wird als nachteilig empfunden, dass sich das Spurführsystem nur solange monoton verhält, als bei beiden Messfenstern die Aussenkanten innerhalb der dunklen Bänder und die Innenkanten innerhalb des hellen Bandes liegen. Ausserhalb dieses Bereiches ist ein indifferentes verhalten oder sogar ein Verhalten mit inversen Vorzeichen zu beobachten. Es ergibt sich daraus ein reduzierter Fangbereich bei der Spurführung, was deren Zuverlässigkeit beeinträchtigen kann.

In der bereits erwähnten DE-A-2 459 358 sind mehrere quer zur passiven Leitlinie angeordnete Sensoren vorgesehen. Die Lage der Leitlinie ergibt sich durch Vergleich der von den Sensoren aufgenommenen Helligkeitswerten. Zur Berücksichtigung von Verschmutzungen der Leitlinie wird ein Bezugswert gebildet aus dem Mittelwert des von allen Sensoren empfangenen Lichts. Zur einwandfreien Funktion ist damit jedoch immer noch eine Reflektivität bei der Leitlinie nötig, die wenigstens einige Male so gross ist, wie diejenige der Nachbarflächen. Die Erfahrung zeigt, dass solche Verhältnisse oftmals nicht vorliegen, sondern dass der Kontrast zu klein wird, um mit der Mittelwert-Bezugswertmethode ein eindeutiges Steuersignal zu erhalten.

Die Erfindung, wie sie in den Ansprüchen gekennzeichnet ist, löst die Aufgabe, bei einem Betriebssystem für spurgeführte Transport- und Montageeinheiten die Flexibilität zu erhöhen sowie Aufbau und Funktion zu vereinfachen. Hiezu bezweckt die Neuerung, eine Leitlinie so zu gestalten, dass sie leicht und rasch am Boden angebracht und auch wieder entfernt werden kann und zugleich zur Spurführung wie zur Funktionssteuerung der Fahrzeuge dient. Auch soll das neue Betriebssystem weitgehend tolerant sein gegen Verschmutzungen von Leitlinie und Fahrbahn sowie eine erhöhte Störsicherheit und Funktionszuverlässigkeit aufweisen.

Diese Aufgabe wird erfindungsgemäss mit den Mitteln gelöst, wie sie in der Fassung des unabhängigen Anspruches gekennzeichnet sind. Vorteilhafte Weiterbildungen sind in den abhängigen Ansprüchen angegeben. Darüber hinaus weist ein mit diesen Mitteln gestaltetes Betriebssystem für spurgeführte Fahrzeuge noch zusätzliche Vorteile auf:

Erste Vorteile ergeben sich aus der Verwendung eines optischen Systems, dessen handelsübliche Sensoren bei den vorliegenden Mindestabständen eine höhere Auflösung besitzen als andere, z. B. induktive Sensoren. Dies ermöglicht dem Fahrzeug seine momentane Position über der Fahrbahn sehr präzise festzustellen und dadurch die Passivspur mit grosser Genauigkeit zu verfolgen. Für den Strichcode bedeutet die höhere Auflösung der Leseeinrichtung eine grössere Informationsdichte; und dies ohne Verlust an Lesbarkeit. Offensichtlich lässt sich damit auf einem kurzen Streckenabschnitt eine grosse Anzahl der meist ortsgebundenen Steuerfunktionen abspeichern, was die Disposition der an Kreuzungen und Übergabestellen vom Fahrzeug auszuführenden Funktionen wesentlich erleichtert. Weiter hat sich als vorteilhaft erwiesen, dass das erfindungsgemässe Passivspur-System Selbstüberwachung aufweist und dass aufgrund eines Qualitätsfaktors, der laufend berechnet wird, vorsorgliche Wartung möglich ist. Dadurch können Spurführsysteme, die an sich gegen Verschmutzung empfindlich sind, auch im Freien oder unter generell erschwerten Bedingungen betrieben wer-

2

den. Allfällige Störungen von Fahrbahn oder Abtasteinrichtung werden nämlich durch den Qualitätsfaktor rechtzeitig angezeigt, so dass sie behoben werden können, bevor es zu einem Betriebsunterbruch kommt. Wesentliche Vorteile ergeben sich auch aus dem Umstand, dass die Systemteile für Spurführung und Funktionsteuerung beide opto-elektronisch, also in einheitlicher Technik ausgeführt sind. So ist es möglich, die Leseköpfe für Passivspur und Strichcode in einem integrierten Optikblock zusammenzufassen. Zudem können verschiedene Elemente, wie Elektronik-Prints, Gehäuse, Verbindungskabel usw. für beide unterschiedlichen Funktionen, nämlich sowohl für die Spurführung wie für die Codelesung, eingesetzt werden. Dadurch werden Zusammenbau, Montage und Justierung des Passivspur-Systems erleichtert und dessen Unterhalt inklusive Disposition von Ersatzteilen vereinfacht, was generell zu einer kostengünstigen Lösung führt.

Im weitern ist die Neuerung voll kompatibel mit herkömmlichen induktiven Spurführsystemen. So entspricht ihre Leseeinrichtung, bestehend aus Lesekopf und Auswerte-Elektronik, funktionell und in der Schnittstelle zur Fahrzeugsteuerung weitgehend der bekannten Ferritantenne mit nachfolgender Signalaufbereitung bei Induktionsschleifen. Das neue Passivspur-System eignet sich deshalb vorzüglich zur Um- und Nachrüstung von bestehenden induktiven Spurführsystemen. Da überdies seine wesentlichen Merkmale, nämlich die Ausgestaltung der Passivspur, die spezielle optische Leseeinrichtung sowie die neuartige Auswertung der empfangenen Signale auf der Grundlage statistischer Mittelwertbildung auf den Betrieb gleisloser Fahrzeuge ausgerichtet sind, ist sein Einsatz, insbesondere bei flexiblen Fertigungssystemen, wirtschaftlich und effizient.

Die Erfindung ist im folgenden anhand der Beschreibung sowie der Zeichnung in ihrer Anwendung bei der Führung und Steuerung fahrerloser Transporteinheiten näher erläutert.

In der lediglich dieses Anwendungsbeispiel der Erfindung darstellenden Zeichnung zeigen:

Fig. 1 schematisch eine Disposition des Passivspur-Systems mit den Anlageteilen zur Führung und Steuerung eines Fahrzeuges.

Fig. 2a eine schematische Darstellung der grundsätzlichen Ausführung der Erfindung als Passivspur-Führsystem bei zentrierter und dezentrierter Spurlage des Fahrzeuges.

Fig. 2b beine mögliche Ausbildung des Lesekopfes zur Verfolgung der Passivspur gemäss Fig. 2a.

Fig. 3a eine graphische Darstellung der Kreuzkorrelationsfunktionen bei zentrierter und dezentrierter Spurlage des Fahrzeuges gemäss Fig. 2a.

Fig. 3b eine graphische Darstellung zur Interpolation der Kreuzkorrelationsfunktion im Bereiche ihres Maximums.

Fig. 4 eine tabellarische Darstellung zur Auflistung und Auswertung gemessener Qualitätsfaktoren.

Fig. 5 eine schematische Darstellung der Erfindung als Passivspur-Steuersystem mit Ausbildung des Strichcodes als Teil der Passivspur.

Fig. 6 im Grundriss und im Aufriss den integrierten Lesekopf zum Verfolgen der Passivspur sowie zum Lesen des Strichcodes.

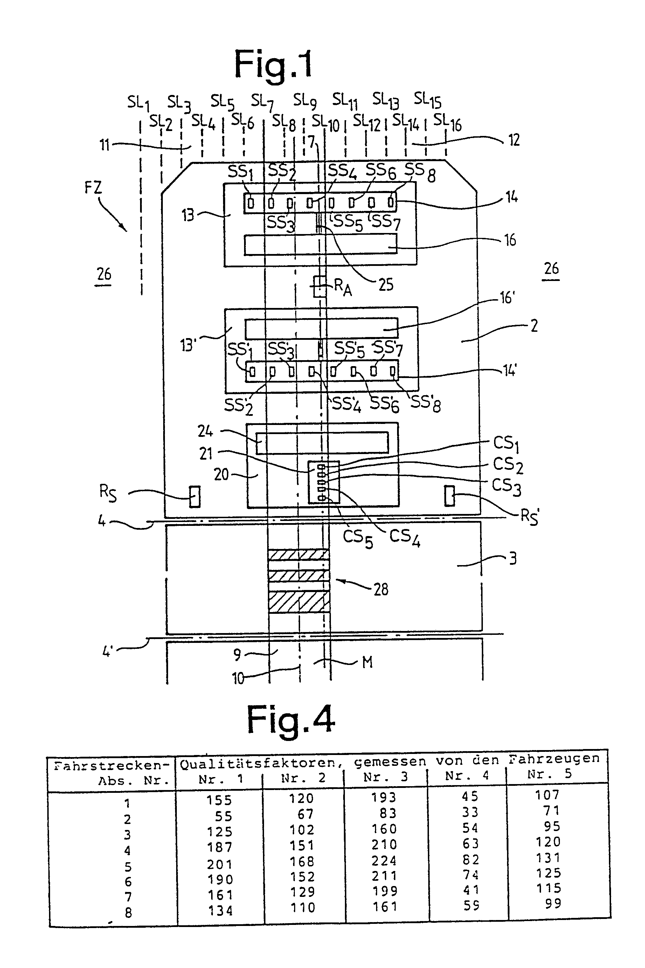

Fig. 1 zeigt eine mögliche Ausbildung des Passivspur-Systems, wie es zur Führung und Steuerung eines Fahrzeuges FZ vorgesehen ist. Das Fahrzeug FZ besteht aus zwei mit einem lastaufnehmenden Stützkörper 3 und je einem Gelenk 4, 4' spiegelsymmetrisch verbundenen separaten Fahrzellen, die identisch aufgebaut sind und von denen im vorliegenden Beispiel bloss eine dargestellt und mit 2 bezeichnet ist. Jede Fahrzelle 2 enthält im wesentlichen ein nicht weiter dargestelltes lenkbares Antriebsrad $R_A$ mit Fahr- und Lenkservo, zwei nachlaufende Stützräder $R_S$, $R_S'$ sowie die notwendigen Leseeinrichtungen 13, 20 zur Abtastung der Passivspur 9 bzw. des Strichcodes 28. Das derart ausgebildete Fahrzeug FZ ist hinsichtlich Vorwärts/Rückwärtsfahrt vollkommen symmetrisch. Die Passivspur 9, die mit einfachen Verfahren, wie Streichen, Spritzen oder Kleben dauerhaft auf dem Boden angebracht und zur Reparatur oder Änderung auch wieder leicht entfernt werden kann, besteht im Normalfall aus einem am Boden aufgeklebten, stark reflektierenden Kunststoffband. Der gewählte Kunststoff hat genügend hohen Kontrast zu einer Vielzahl von Böden unterschiedlichster Qualitäten, weist eine hohe Verschleissfestigkeit auf und ist resistent gegen übliche in der Industrie verwendete Stoffe. Auch kann eine derart ausgebildete Passivspur 9 mit Reinigungsmaschinen gesäubert werden. Das Passivspur-Führsystem besteht aus der am Boden angebrachten Passivspur 9 sowie aus den fahrzeuggestützen Passivspur-Leseeinrichtungen 13, 13' für Vorwärts- bzw. Rückwärtsfahrt mit ihren Leseköpfen 14, 14' und Auswerte-Elektroniken 16, 16'. Als aktive optische Elemente enthalten die Leseköpfe 14, 14' je 8 Spursensoren $SS_1$, $SS_2$...$SS_8$ bzw. $SS_1'$, $SS_2'$...$SS_8'$ die an der Fahrzeugunterseite angebracht sind. Mit $SL_1$, $SL_2$...$SL_{16}$ sind 16 Spurlagen bezeichnet, in deren Bereichen die Fahrbahn je einen Helligkeitswert aufweist, der davon abhängt, ob das zugehörige Helligkeitsmessfenster ganz in der Passivspur 9 ($SL_8$; $SL_9$) oder ganz in den beidseits anschliessenden Bodenbereichen 11, 12 ($SL_1$ bis $SL_6$; $SL_{11}$ bis $SL_{16}$) oder je zur Hälfte in der Passivspur 9 und in den beidseits anschliessenden Bodenbereichen 11, 12 ($SL_7$; $SL_{10}$) liegt. Diese Helligkeitswerte stellen ein in Querrichtung verlaufendes diskretes Helligkeitsprofil der Fahrbahn dar, das als "Muster" dient. Eine allfällige Spurabweichung wird vom Fahrzeug dadurch ermittelt, dass es seine momentane Spurlage, die durch von den Spursensoren $SS_1$, $SS_2$...$SS_8$ bzw. $SS_1'$, $SS_2'$...$SS_8'$ gemessenen Lichtwerte definiert ist, mit dem "Muster" vergleicht. Zum Passivspur-Steuersystem gehören weiter der als Teil der Passivspur 9 ausgebildete Strichcode 28, sowie die fahrzeuggestützte Strichcode-Leseeinrichtung 20, enthaltend Lesekopf 21 mit Codesensoren $CS_1$, $CS_2$...$CS_5$ und Auswerte-Elektronik 24.

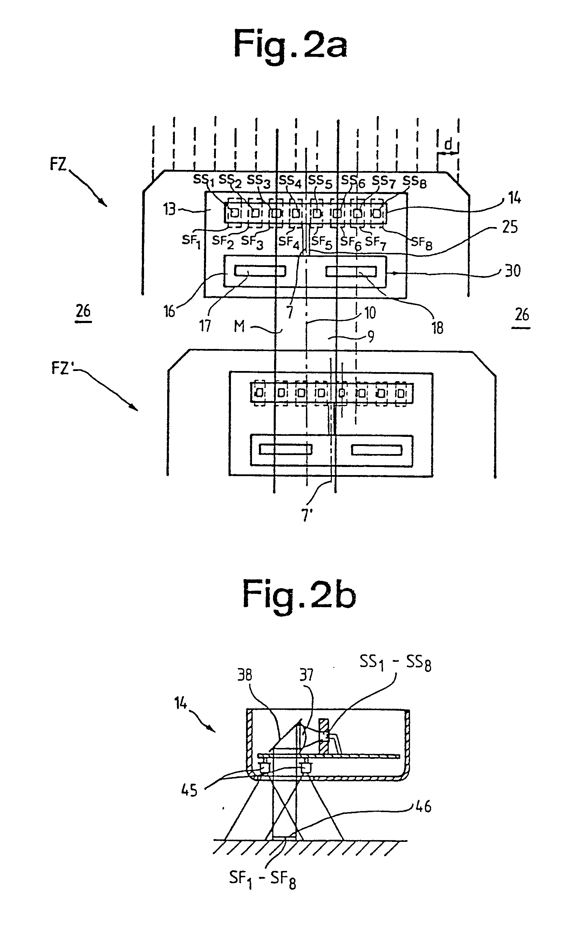

In der Figur 2a ist das Passivspur-Führsystem in Verbindung mit zwei Fahrzeugen FZ und FZ' dargestellt, welche bezüglich der Passivspur 9 zentriert bzw. um 1,25 Spurlagen nach rechts verschoben auf der Fahrbahn angeordnet sind. Dabei ist der Einfachheit halber nur das Führsystem für die Vorwärtsfahrtrichtung dargestellt. Die aus Lesekopf 14 und Auswerte-Elektronik 16 zusammengesetzte Passivspur-Leseeinrichtung 13 entspricht funktionell und in der Schnittstelle zur Fahrzeugsteuerung weitgehend der bekannten Ferritantenne für Induktivschleifen mit nachfolgender Signalaufbereitung, so dass optionell das eine oder das andere Spurführsystem verwendet werden kann. Zur Sicherstellung der Kompatibilität weist die an den Rechner der Fahrzeugsteuerung via Parallelausgang 30 übergebene Positionsinformation für beide Systeme die Form eines digitalen Wertes im Wertebereich - 127 bis + 128 auf. Die Leseeinrichtung ist weitgehend unempfindlich gegenüber Fremdlicht wie Arbeitsplatzeleuchtung mittels Glüh- oder Gasentladungslampen, Sonnenlicht sowie IR-Einstrahlung von div. Lichtschranken usw., was auch durch eine gewisse Abschirmwirkung des Fahrzeugkörpers, vor allem gegen oben, erreicht wird. Aus Gründen der Rechengeschwindigkeit, der Auflösung und des Platzbedarfs wurde die Zahl der Spursensoren auf n = 8 festgelegt. Zur Sicherstellung des Fangbereiches sind die einzelnen Sensoren im Abstand von 12,5 mm linear quer zur Fahrtrichtung montiert. Die aktive Sensorfläche beträgt 3,2 x 1,55 mm. Bis zwei Leseköpfe können über das Kabel 25 an der Auswerte-Elektronik 16 angeschlossen werden. Diese enthält einen Rechner- und einen Interface-Print 17 bzw. 18 und ist für die Wahrnehmung aller notwendigen Funktionen ausgerüstet. Die Software des Rechner-Prints enthält alle nötigen Programme für die Berechnung der Spurablage mittels des später noch eingehend zu erläuternden Verfahrens für die Steuerung von Prüfungen, wie z. B. Spurbeginn, Spurende sowie für die Datenübertragung zum Fahrzeugrechner.

Gemäss Fig. 2b kann der Lesekopf 14 mit einer 90-Grad-Strahlumlenkung versehen sein. LED's oder IR-Emittoren 45 beleuchten den im Bereiche des Lesekopfes 14 liegenden Fahrbahnbereich, wobei das innerhalb der Spur-Helligkeitsmessfenster $SF_1$, $SF_2$...$SF_8$ reflektierte Licht nach Umlenkung in einem mit einer 8-fach Sammellinie 37 integrierten Prisma 38 auf die aktive Fläche der Spursensoren $SS_1$, $SS_2$...$SS_8$ geführt ist. Zur Maximierung der Lichtausbeute ist eine einfache Optik mit einem Abbildungsmasstab 4 : 1 eingebaut. Es wird damit ein aktives Spur-Helligkeitsmessfenster $SF_1$, $SF_2$...$SF_8$ von 12,8 x 6,20 mm pro Spursensor erreicht.

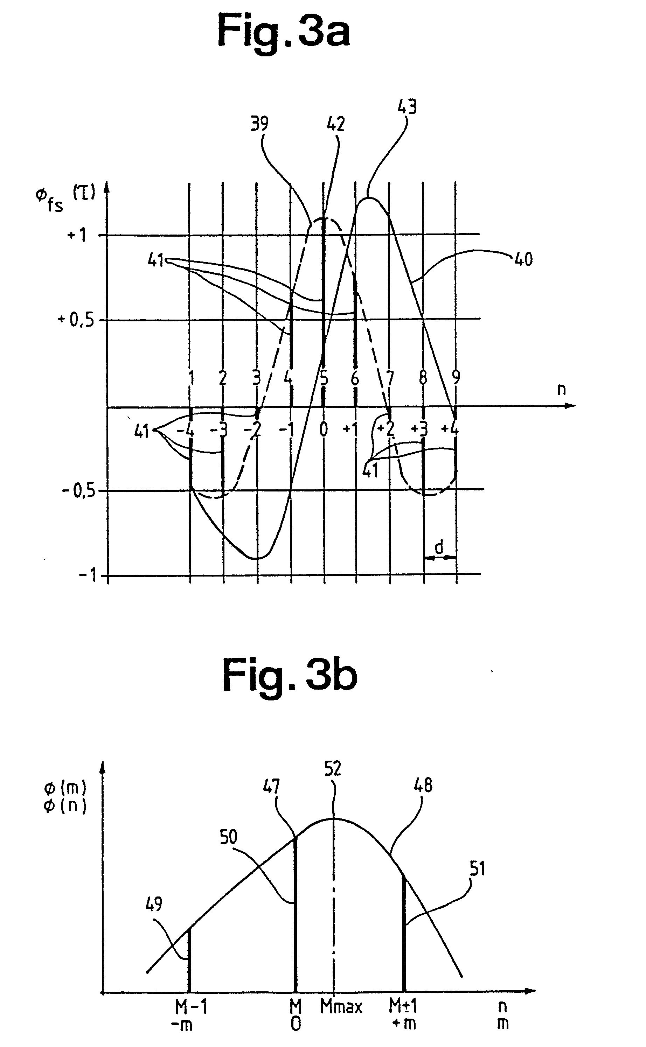

In Fig. 3a sind die Kreuzkorrelations-Funktionskurven 39, 40 dargestellt, wie sie der zentrierten bzw. dezentrierten Spurlage der beiden Fahrzeuge FZ bzw. FZ' in Fig. 2a entsprechen. Aufgrund des verwendeten Rastermasses d ergeben sich diskrete Funktionen bestehend aus den Stützwerten 41, die den Stützstellen 1 bis 9 zugeordnet sind. Von Bedeutung sind die Maxima 42 und 43, da ihre zugeordneten Stützstellen, unabhängig von der Helligkeit der Passivspur 9 oder des Hintergrundes, mit den Spurlagen der Fahrzeuge FZ bzw. FZ' zusammenfallen und so deren Spurabweichung anzeigen. Die Funktionsmaxima 42, 43 können auf einen Stützwert fallen oder - was weit häufiger eintreffen dürfte - eine Lage zwischen den Stützwerten einnehmen. Im letzteren Falle kommt das in Fig. 3b dargestellte Verfahren zur Anwendung. Im Bereiche des Maximalwertes 47 der 9 Stützwerte ist die diskrete Kreuzkorrelationsfunktion durch eine kontinuierlich verlaufende Kurve 48 ersetzt, die sich durch quadratische Interpolation aus den Stützwerten 49, 50 und 51 in den Stützstellen M - 1, M und M + 1 ergibt. Der absolute Maximalwert ist dann mit 52 bezeichnet und nimmt die Lage $M_{max}$ ein.

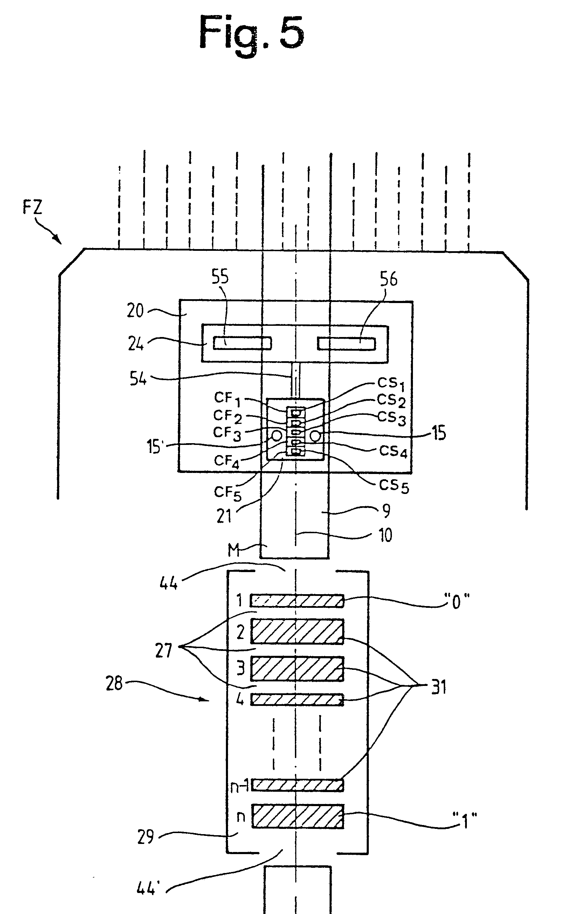

Die Fig. 4 betrifft den Qualitätsfaktor. In einer Tabelle ist für jede mögliche Zuordnung zwischen 8 Fahrstreckenabschnitten und 5 Fahrzeugen der zugehörige Qualitätsfaktor des Passivspur-Systems eingetragen, "1" für unbrauchbar, "255" für Ideal-Zustand. Diese Qualitätsfaktoren werden von den Fahrzeugen berechnet, umfassen aber immer die Gesamtqualität des auf einem Fahrzeug FZ gestützten Teiles des Passivspur-Systemes und der Passivspur 9 im zugeordneten Fahrstreckenabschnitt 36. Beim Einsatz mehrerer Fahrzeuge auf dem selben Layout werden die Qualitätsfaktoren der Streckenabschnitte durch jedes einzelne Fahrzeug an die übergeordnete ortsfeste Steuervorrichtung übermittelt. Der ortsfeste Rechner, der auch beim Einsatz von prozessorgesteuerten Fahrzeugen zur Disposition usw. erforderlich ist, unterhält die Tabelle gemäss Fig. 4. Daraus ist ersichtlich, dass kein totaler Defekt vorliegt. Hingegen ergibt sich aus einer Majoritätsbetrachtung, dass die Passivspur 9 im Fahrstreckenabschnitt Nr. 2 an einer oder mehreren Stellen verschmutzt oder abgenützt ist und dass das Fahrzeug Nr. 4 und eventuell auch das Fahrzeug Nr. 5 kontrolliert werden sollte.

In Fig. 5 ist das Passivspur-System als Passivspur-Steuersystem dargestellt, bestehend aus dem auf dem Boden angebrachten Strichcode 28 und der im Fahrzeug FZ eingebauten Strichcode-Leseeinrichtung 20. Der Strichcode 28 besteht grundsätzlich aus querverlaufenden Unterbrüchen 27 in der Leitlinie und ist somit integrierender Bestandteil der Passivspur 9. Wie sie kann auch der Strichcode 28 durch Verfahren wie Streichen, Spritzen oder Kleben, dauerhaft auf dem Boden angebracht und zur Reparatur oder Änderung auch wieder entfernt werden. Bei dem in Fig. 5 dargestellten Ausführungsbeispiel der Erfindung besteht der Strichcode 28 aus einem aufgeklebten, reflexionsarmen Kunststoffband 29, das als kontrastverstärkender Hintergrund dient und auf dem die stark reflektierenden Codestreifen 31 aufgebracht sind. Diese bestehen aus dem selben Material wie die Passivspur 9, übertreffen dieselbe aber in der Breite, um auch bei grösseren Spurabweichungen eine zuverlässige Codelesung zu ermöglichen. Im weitern unterscheiden sich die Codestreifen 31 durch zwei unterschiedliche Längen als logisch "0" und logisch "1", so dass sie im vorliegenden Ausführungsbeispiel folgende Abmessungen aufweisen: 53 x 5 mm für logisch "0", 53 x 11,5 mm für logisch "1". Der Abstand zwischen den einzelnen Codestreifen 31 beträgt einheitlich 8 mm. Zum Initialisieren bzw. Beenden der Codelesung sind markante Unterbrüche 44, 44', beide ≥43,5 mm am Anfang und am Ende der Codesequenz vorgesehen. Eine weitere Ausführungsvariante für den Strichcode 28 besteht darin, ein dünnes Aluminiumblech auf dem Boden anzubringen, das im Muster des Codes schwarz/weiss eloxiert ist. Die im Fahrzeug FZ eingebaute StrichcodeLeseeinrichtung 20 für das Lesen des Strihcodes 28 besteht aus Lesekopf 21 und Auswerte-Elektronik 24 und ist in der Passivspur-Leseeinrichtung 13, 13' integriert oder separat aufgebaut, wenn das passivspur-Steuersystem alleine benutzt wird. Die Codesensoren $CS_1$, $CS_2$...$CS_5$ mit einer aktiven Sensorfläche von 1 x 1 mm sind in Fahrtrichtung hintereinander im Abstand von 1,5 mm angeordnet. Durch eine Optik mit einem Abbildungsmasstab 2 : 1 wird eine aktive Codefläche von 2 x 2 mm erreicht. Zur Beleuchtung des Strichcodes 28 ist beidseits der Codesensoren $CS_1$, $CS_2$...$CS_5$ je eine Halbleiterlichtquelle 15, 15' eingebaut. Maximal zwei Leseköpfe 21 können über je ein Verbindungskabel 54 an die Auswerte-Elektronik 24 angeschlossen werden. Diese enthält einen Rechnerprint 55 und einen Interfaceprint 56 und ist für die Wahrnehmung aller zum normalen Betriebsablauf gehörenden Funktionen ausgerüstet.

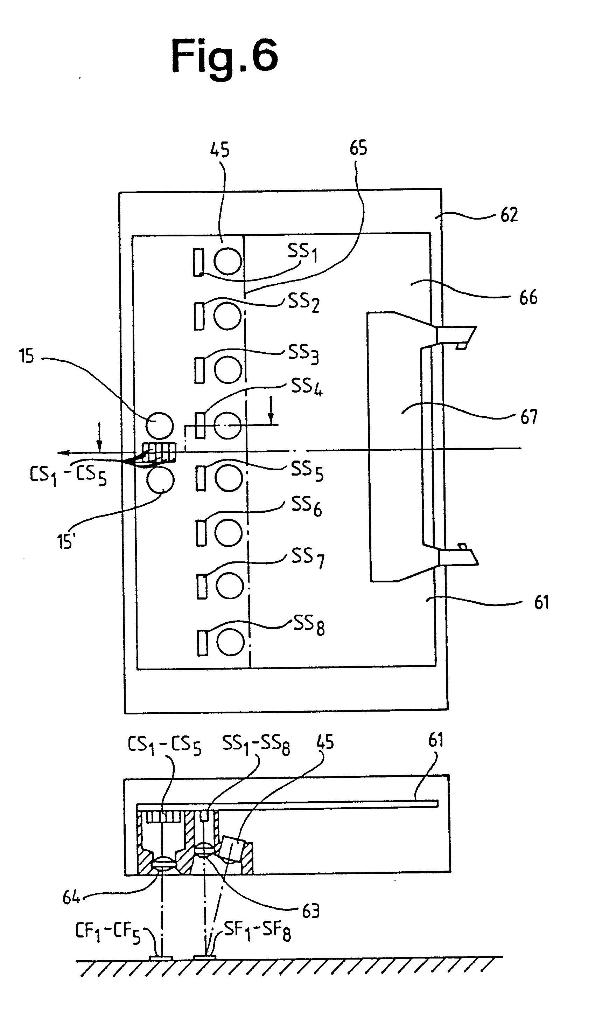

Die durch Verwendung einer einheitlichen Technik ermöglichte Integration der Leseköpfe 14 und 21 für die Passivspur 9 bzw. den Strichcode 28 ist in Fig. 6 dargestellt. Auf einem Print 61 im Gehäuse 62 sind die Spursensoren $SS_1$...$SS_8$ sowie die Codesensoren $CS_1$...$CS_5$ mit ihren Abbildungsoptiken 63 bzw. 64 und Beleuchtungsdioden 45 bzw. 15 zu einem Optikblock 65 zusammengefasst, der über eine Elektronik 66 und den Stecker 67 mit dem Fahrzeugrechner 17 verbunden ist. Diese Ausführungsvariante der Erfindung verzichtet auf die rechtwinklige Strahlumlenkung bei den Spursensoren

SS$_1$...SS$_8$ und verwendet auch bloss eine Lichtquelle zur Beleuchtung der zugehörigen Spur-Helligkeitsmessfenster SF$_1$ SF$_8$.

Die Funktionsweise des erfindungsgemässen Passivspur-Systems sei im folgenden anhand seiner beiden wesentlichen Funktionen, nämlich Spurführung und Funktionssteuerung, erläutert.

Für die Funktion als Passivspur-Führsystem gemäss den Figuren 2a und 2b kommt den 8 Spursensoren SS$_1$, SS$_2$...SS$_8$ grundlegende Bedeutung zu. Sie "beobachten die Fahrbahn und geben dem Fahrzeug FZ den Fahrbahnabschnitt bekannt, über dem es sich gerade befindet, indem sie elektrische Signale f$_1$, f$_2$...f$_8$ liefern, die proportional zur mittleren Helligkeit innerhalb der Spur-Helligkeitsmessfenster SF$_1$...SF$_8$ im betreffenden Fahrbahnbereich sind und als IST-Werte bezeichnet werden. Da die Spurlagen SL$_1$, SL$_2$...SL$_{16}$ auf der Fahrbahn 26 sowie die Spursensoren SS$_1$, SS$_2$...SS$_8$ an der Fahrzeugunterseite die gleiche Anordnung und den gleichen gegenseitigen Abstand d aufweisen und zusätzlich die Breite der Passivspur 9 im vorliegenden Ausführungsbeispiel der Erfindung dreimal dem Spurlagenabstand d entspricht, ergeben sich - nach Signalaufbereitung - für die Lagen der beiden Fahrzeuge FZ, FZ' z. B. folgende IST-Werte:

für Fahrzeug FZ: (zentrierte Spurlage)

| n = | 1 | 2 | 3 | 4 | 5 | 6 | 7 | 8 |
|---|---|---|---|---|---|---|---|---|
| f(n) = | 0,1 | 0,1 | 0,5 | 0,9 | 0,9 | 0,5 | 0,1 | 0,1 |

für Fahrzeug FZ': (dezentrierte Spurlage)

| n = | 1 | 2 | 3 | 4 | 5 | 6 | 7 | 8 |
|---|---|---|---|---|---|---|---|---|
| f(n) = | 0,1 | 0,9 | 0,9 | 0,9 | 0,1 | 0,1 | 0,1 | 0,1 |

Diese beiden IST-Wertesets stellen zwei sich beidseits der Fahrzeuglängsmittelachse 7 über je 4 Spurlagenabstände erstreckende Helligkeitsprofile der Fahrbahnabschnitte dar, über denen sich die Fahrzeuge FZ, FZ' gerade befinden. Andererseits ergeben die den 16 Spurlagen SL$_1$ SL$_{16}$ entsprechenden Helligkeitswerte - nach zweckmässiger Umformung sowie Normierung gemäss nachfolgender Formel 3 folgendes Soll-Werteset:

| n = | 1 | 2 | 3 | 4 | 5 | 6 | 7 | 8 |
|---|---|---|---|---|---|---|---|---|
| s(n)= | −3/16 | −3/16 | −3/16 | −3/16 | −3/16 | −3/16 | +5/16 | +13/16 |

| n | 9 | 10 | 11 | 12 | 13 | 14 | 15 | 16 |
|---|---|---|---|---|---|---|---|---|
| s(n) = | +13/16 | +5/16 | −3/16 | −3/16 | −3/16 | −3/16 | −3/16 | −3/16 |

Dieses SOLL-Werteset ist im Rechner 17 gespeichert und stellt ein normiertes Helligkeitsprofil der Fahrbahn dar, das sich beidseits der Passivspur-Mittellinie 10 in Querrichtung über je 8 Spurlagenabstände erstreckt.

Zur Bestimmung der Spurlage stellt das Fahrzeug FZ fest, welcher Bereich des SOLL-Helligkeitsprofiles am besten mit dem gemessenen IST-Helligkeitsprofil übereinstimmt. Die Mittellage dieses Bereiches entspricht dann der SpurLage des Fahrzeuges FZ.

Rechnerisch wird die beste Übereinstimmung der beiden Helligkeitsprofile durch Kreuzkorrelation des IST-Wertesets mit dem SOLL-Werteset ermittelt. In unserem Fall sei die Kreuzkorrelation wie folgt definiert:

$$\Phi_{fs}(\tau) = \sum_{i=1}^{n} (f_i - \bar{f}) \cdot s_{i+\tau} \quad 0 \leq \tau \leq n \tag{1}$$

mit dem Mittelwert der n IST-Messwerte f$_i$

$$\bar{f} = \frac{1}{n} \sum_{i=1}^{n} f_i \tag{2}$$

und unter der Voraussetzung dass der Mittelwert der 2n SOLL-Werte s$_i$ gleich Null ist

$$\sum_{i=1}^{2n} s_i = 0 \tag{3}$$

Nach Durchführung einer Berechnung nach Formel 1 liegt die Kreuzkorrelationsfunktion $\Phi_{fs}(\tau)$ zwischen n Sensorwerten und 2n Spurlagenwerten in der Form von n + 1 Stützwerten vor.

Für die Spurlagen der beiden Fahrzeuge FZ, FZ' in Fig. 2a ergeben sich aufgrund der vorgenannten Wertesets für f$_n$'

$f_n'$ und $s_n$ die in Fig. 3a dargestellten Kreuzkorrelationsfunktionen $\Phi_{fs}(\tau)$ und $\Phi'_{fs}(\tau)$. Vorerst ist festzuhalten, dass es sich dabei, je nach der Grösse des Abstandes d um diskrete bzw. pseudo-kontinuierliche Funktionen handelt. Im weitern ist ersichtlich, dass die Spurlagen der Fahrzeuge FZ, FZ' durch die Maxima der zugehörigen Kreuzkorrelationsfunktionen $\Phi_{fs}(\tau)$ und $\Phi'_{fs}(\tau)$ gegeben sind. Es gilt demnach, als nächstes ein einfaches rechnerisches Verfahren zur Bestimmung des Maximums der Kreuzkorrelationsfunktion $\Phi_{fs}(\tau)$ anzugeben.

Die im vorliegenden Ausführungsbeispiel der Erfindung vorgesehene Verwendung von 8 Spursensoren mit gegenseitigem Abstand d stellt einen Kompromiss dar, um insbesondere den messtechnischen Aufwand klein zu halten. Dies bedingt eine diskrete Kreuzkorrektionsfunktion $\Phi_{fs}(\tau)$, welche die Spurlage eines Fahrzeuges nur im Rahmen des durch den Abstand d gegebenen Rasters erfassen kann, d. h. nur wenn die Fahrzeuglage mit einer Spurlage zusammenfällt. Andererseits wird das Fahrzeug aber mit weit grösserer Wahrscheinlichkeit ausserhalb des Rasters fallende Spurlage einnehmen, welche für die Bedürfnisse der Spurführung aus regelungstechnischen Gründen mit hoher Auflösung erfasst werden müssen. Die diskrete, 9 Stützwerte aufweisende Kreuzkorrelationsfunktion wird deshalb durch Interpolation der fehlenden Funktionswerte in eine kontinuierliche Funktion umgewandelt, wie man sie mit unendlich vielen Spursensoren auch erhalten würde. Die vollständige Lösung dieser Aufgabe, nämlich

– Aufstellen eines Polynoms n-ter Ordnung durch die n + 1 Stützwerte
– Ableiten dieses Polynoms
– Berechnung der n - 1 Wurzeln des Ableitungspolynoms
– Suche der mit dem absoluten Maximum im Definitionsbereich übereinstimmenden Wurzel ist für den vorgesehenen Einsatzzweck zu rechenintensiv, da bei schneller Fahrt (bis 1,5 m/s) pro Rechenzyklus nur wenige Millisekunden zur Verfügung stehen.

Es wird deshalb ein anderes Verfahren verwendet, welches, bei vertretbarem Aufwand, sehr gute Ergebnisse liefert. Dabei geht man von der Erkenntnis aus, dass die Kreuzkorrelationsfunktion nur im Bereiche ihres Maximums einen kontinuierlichen Verlauf aufweisen muss, da nur dieser Bereich zur Ermittlung der Spurlage des Fahrzeuges von Bedeutung ist. Dieses neue Verfahren enthält die folgenden drei Schritte:

1) Von den n + 1 Stützwerten wird das Maximum gesucht (= M).
2) Ein Polynom 2. Grades wird durch diesen Punkt und seine beiden Nachbarn links und rechts gelegt.
3) Die Ableitung dieses Polynoms ist eine Funktion 1. Grades (Gerade), deren Nulldurchgang einfach bestimmbar ist. Da die drei bestimmenden Stützwerte ein Maximum enthalten, muss der Nulldurchgang der Ableitung auch einem Funktionsmaximum entsprechen.

Diese Verfahrens-Schritte werden nachfolgend im Detail erklärt:

## 1. Schritt

Ist die Stützstelle M mit dem maximalen Funktionswert gefunden, muss sichergestellt werden, dass links ein Wert M - 1, rechts ein Wert M + 1 vorhanden ist. Liegt aber M auf 1 oder n + 1, so wird das Maximum als gefunden betrachtet (1 bzw. n + 1). Falls die drei Funktionswerte auf einer Geraden liegen, wird anstelle von Schritt 2 und 3, eine spezielle Behandlung durchgeführt.

## 2. Schritt

Es wird das folgende Polynom aufgestellt:

$$\Phi(m) = a_2 m^2 + a_1 m + a_0 \tag{4}$$

und die gefundene Stützstelle M (mit dem Maximalwert $\Phi(M)$) wird als Polynom-X-Wert = 0 gesetzt. Weiter wird angenommen:

$$(M + 1) - M = ms = 1 \quad \text{und} \quad (M - 1) - M = -ms = -1$$

Damit wird

$$a_0 = \Phi(M) \tag{5}$$

Mit den Beziehungen:

$$\Phi(M - 1) = a_2 \cdot ms^2 - a_1 \cdot ms + \Phi(M) \tag{6}$$

$$\Phi(M + 1) = a_2 \cdot ms^2 + a_1 \cdot ms + \Phi(M) \tag{7}$$

sind die beiden Polynom-Koeffizienten $a_1$ und $a_2$ zu bestimmen:

$$a_1 = \frac{\Phi(M + 1) - \Phi(M - 1)}{2 \, ms} \tag{8}$$

$$a_2 = \frac{\Phi(M + 1 + \Phi M - 1) - 2 \, \Phi(M)}{2 \, ms^2} \tag{9}$$

womit der 2. Schritt abgeschlossen ist.

### 3. Schritt

Es wird die Ableitung des Polynoms gebildet:

$$\frac{d\Phi}{dm} = 2a_2 ms + a_1 \tag{10}$$

Mit Null-Setzen und nach m Auflösen erhält man

$$m = -\frac{a_1}{2a_2} \tag{11}$$

In (11) für $a_1$ und $a_2$ Formel (8) und (9) eingesetzt:

$$m = \frac{\Phi(M - 1 - \Phi(M + 1)}{\Phi(M + 1) + \Phi(M - 1) - 2 \, \Phi(M)} \cdot \frac{ms}{2} \tag{12}$$

mit m im Bereich: $-1 < / = m < / = 1$.

Das Ergebnis m ist der interpolierte Ort des Maximums der Kreuzkorrelationsfunktion bezogen auf den Ort M des Maximal-Stützwertes, womit der 3. Schritt abgeschlossen ist.

Die gesuchte Abweichung As der Spursensoren $SS_1...SS_8$ gegenüber der Spurmitte kann nun wie folgt ermittelt werden:

$$As = (\frac{n}{2} + 1) - M - m \tag{13}$$

Falls die drei Funktionswerte $\Phi(M - 1)$, $\Phi(M)$ und $\Phi(M + 1)$ auf einer Geraden liegen, wird der Nenner in (12) zu Null. Dieser spezielle Fall ist je nach Steigung der Geraden gesondert zu behandeln:

1) Alle 3 Punkte weisen denselben Funktionswert auf, die Steigung der Geraden ist Null:
   Das Maximum liegt bei M und somit m = 0

2) Die 3 Punkte weisen unterschiedliche Funktionswerte auf, das Maximum liegt beim höchsten der beiden äusseren Werte, ist die Steigung
   positiv, liegt das Maximum bei M + 1 und somit m = 1
   negativ, liegt das Maximum bei M - 1 und somit m = -1

Für die Funktion als Passivspur-Steursystem gemäss Fig. 5 werden an bestimmten Stellen des Streckennetzes Informationen benötigt, damit das Fahrzeug (FZ) an der rechten Stelle eine bestimmte Funktion ausführt, wie z. B. Anhalten, Verzweigen, Lastübergabe, Geschwindigkeit reduzieren usw. Bei mit Prozessoren ausgerüsteten Fahrzeugen sind zusätzlich Informationen erforderlich, wie z. B. Orts- oder Streckenbezeichnungen, Übergabeplatz-Nummern usw., um einen möglichst autonomen, von ortsfesten Einrichtungen unabhängigen Betrieb zu gewährleisten. Diese Informationen, die meist aus mehreren Bits - einem Datenwort - bestehen und für die eine möglichst grosse Ortsgenauigkeit verlangt ist, sind im Strichcode (28) encodiert. Dieser wird von den Codesensoren $CS_1...CS_5$ während der Fahrt oder im Stillstand gelesen und die so gewonnene Information der Fahrzeugsteuerung zugeleitet. Aus Gründen des praktischen Einsatzes ist die Anzahl der im Strichcode 28 enthaltenen dünnen (logisch "0") und dicken (logisch "1") Codestreifen 31 begrenzt. Im vorliegenden Ausführungsbeispiel der Erfindung werden pro Datenwort 1 bis 16 Nutzbit und bis zu 5 zusätzliche Korrektur- bzw. Redundanzbit verwendet. Die Anzahl der Nutzbit wird je nach Anwendung festgelegt und bleibt innerhalb einer Anlage konstant.

Strichcodelesen erfolgt durch die 3 hintereinander angeordneten Codesensoren $CS_1$, $CS_2$ und $CS_4$ und ist auch bei Fahrzeugstillstand oder Pendelbewegungen über dem Code möglich. Durch die Verwendung von 3 Codelesesensoren wird ein Pendeln auf den Codestreifen 31 mit Amplituden bis 5 mm erkannt und eine Mehrfachauswertung des gleichen Codestreifens 31 ausgeschlossen. Mit den Codesensoren $CS_3$ und $CS_5$ wird das Codelesen initialisiert. Weil kein Strobsignal benötigt wird, kann der Lesekopf 21 mit den Codesensoren $CS_1...CS_5$ bis +/- 30° schräg über den Strichcode 28 geführt werden.

Ein Codestreifen 31 für logisch "0" wird dadurch erkannt, dass die Codesensoren $CS_1$, $CS_2$ und $CS_4$ abhängig vom vorherigen Zustand in einer von der Leserichtung abhängigen Kombination auf "Sensor-Eins"-Zustand übergehen. Ein Codestreifen 31 für logisch "1" wird dadurch erkannt, dass die Codesensoren $CS_1$, $CS_2$ und $CS_4$ unabhängig vom vorherigen Zustand auf "Sensor-Eins"-Zustand übergehen. Beginn oder Ende des Codes wird durch einen markanten Unterbruch 44, 44' des reflektierenden Materiales erzeugt, wodurch während einer längeren Periode sämtliche Sensoren, also Codelese- und Initialisierungs-Sensoren in den "Sensor-Null"-Zustand übergehen. Der Abstand zwischen den Codestreifen 31 ist so gewählt, dass keiner der obigen Zustände für logisch "0", logisch "1" sowie Beginn oder Ende des Codes eintreten kann. Es ist immer mindestens einer der 3 Codelesesensoren $CS_1$ $CS_2$, $CS_4$ auf "Sensor-Eins"-Zustand.

Der wirtschaftliche Einsatz des erfindungsgemässen Passivspur-Systems wird aber eindeutig bei seiner gleichzeitigen Verwendung zur Spurführung und Funktionssteuerung erzielt. Dabei ist die Passivspur 9 zweifach genutzt, nämlich von den Spursensoren $SS_1...SS_8$ als Leitlinie und von den Codesensoren $CS_1...CS_5$ als Informationsquelle. Auch wird der Strichcode 28, zusammen mit seiner eigentlichen Funktion für die Funktionssteuerung, gleichzeitig zur Spurführung eingesetzt. Obwohl die reflektierenden Codestreifen 31 einen geringeren Helligkeitsmittelwert aufweisen als die reguläre Passivspur 9 ist ihr Kontrast für die Spurführung ausreichend.

## Patentansprüche

1. Passivspur-Anordnung zur Führung und Steuerung einer fahrerlosen Transport- bzw. Montageeinheit, wobei eine als Leitlinie auf der Fahrbahn angebrachte Passivspur (9) mit mindestens einem von der übrigen Fahrbahn (26) unterschiedlichen Merkmal (M) sowie eine fahrzeuggestützte Abtastvorrichtung zur Verfolgung der Passivspur (9) vorgesehen sind, wobei die Abtastvorrichtung zur kontinuierlichen Spurführung des Fahrzeuges eine Anzahl n an der Fahrzeugunterseite quer zur Fahrzeuglängsachse (7) in gegenseitigem Abstand (d) angeordnete Spursensoren ($SS_1$, $SS_2...SS_n$) aufweist, mittels welchen ein IST-Werteset ($f_1$, $f_2...f_n$) von Messgrössen des Merkmals (M) aufnehmbar ist, und wobei die Sensoren mit einer Vorrichtung zur Auswertung des IST-Wertesets für die Lagebestimmung der Spursensoren bezüglich der Leitlinie verbunden sind, welche Spurlagesignale für eine Fahrzeugsteuerung erzeugt, *dadurch gekennzeichnet*, dass die Vorrichtung zur Auswertung des IST-Wertesets (16) einen Rechner (17) mit Datenspeicher aufweist, der ein SOLL-Werteset ($S_1$, $S_2...S_{2n}$) von mindestens 2n - Werten des Merkmals (M) enthält, wobei jeder dieser Werte dem Sollwert der Messgrösse in einer von 2n-Spurlagen ($SL_1$, $SL_2...SL_{2n}$) entspricht, die parallel zur Passivspur (9) und beidseits von dieser im Raster der Spursensoren verlaufen, dass der Rechner (17) ferner dazu ausgebildet ist, die n IST-Werte mit den 2n SOLLWerten mittels Kreuzkorrelation zu verknüpfen, um daraus ein Signal für die momentane Spurlage zu erzeugen und dass entlang der Fahrbahn an bestimmten Stellen auf der Fahrbahn in oder neben der Passivspur (9) ein Strichcode (28), welcher als Informationsquelle für Steuerfunktionen dient, ausgebildet ist, der mittels einem an der Fahrzeugunterseite angeordneten Strichcodeleser (CS) lesbar ist, wobei der Rechner (17) und der Strichcodeleser (CS) mit der Fahrzeugsteuerung verbunden sind, die mittels dem Spurlagesignal und dem gelesenen Strichcode die Transport- und Montageeinheit steuert.

2. Passivspur-Anordnung nach Anspruch 1, *dadurch gekennzeichnet*, dass das den Spurlagen ($SL_1$, $S_2...SL_{2n}$) zugeordnete SOLL-Werteset ($s_1$, $s_2...s_{2n}$) auf die Nenndaten des Passivspur-Systems abgestimmt ist und den Mittelwert 0 aufweist.

3. Passivspur-Anordnung nach Anspruch 1, *dadurch gekennzeichnet*, dass der Rechner (17) zur Durchführung eines Spurführungsalgorithmus vorgesehen ist, der die diskrete Kreuzkorrelationsfunktion $\Phi_{fs}(\tau)$ im Bereiche ihres Maximums zu einer kontinuierlichen Funktion ergänzt, und hiezu die fehlenden Funktionswerte zwischen den Stützwerten durch Interpolation ermittelt.

4. Passivspur-Anordnung nach Anspruch 1, *dadurch gekennzeichnet*, dass für jede Zuordnung von Fahrzeug (FZ) und Fahrstreckenabschnitt (36) ein Qualitätsfaktor des Passivspur-Systems ermittelt wird, der durch Majoritätsentscheid einzelnen Fahrzeugen (FZ) oder einzelnen Fahrstreckenabschnitten (36) zugeordnet ist.

5. Passivspur-Anordnung nach Anspruch 1, *dadurch gekennzeichnet*, dass es sich beim unterscheidenden Merkmal (M) um den optischen Reflexionskoeffizienten von Passivspur (9) und beidseits anschliessenden Bodenbereichen (11, 12) handelt.

6. Passivspur-Anordnung nach Anspruch 5, *dadurch gekennzeichnet*, dass die Passivspur (9) durch Streichen oder Spritzen auf dem Boden angebracht ist, oder aus einem aufgeklebten reflektierenden Metall- oder Kunststoffband besteht und gegenüber den beidseits anschliessenden Bodenbereichen (11, 12) einen erhöhten Reflexionskoeffizienten aufweist.

7. Passivspur-Anordnung nach Anspruch 6, *dadurch gekennzeichnet*, dass die Passivspur (9) eine Breite aufweist, die dreimal dem Abstand (d) zwischen den Spursensoren (SS$_1$...SS$_8$) bzw. den Spurlagen (SL$_1$, SL$_2$...SL$_{16}$) entspricht.

8. Passivspur-Anordnung nach Anspruch 5, *dadurch gekennzeichnet,* dass die Passivspur (9) nicht durchgehend, sondern nur stückweise am Boden angebracht ist, und in den Unterbrüchen vom Fahrzeug extrapoliert wird.

9. Passivspur-Anordnung nach Anspruch 5, *dadurch gekennzeichnet*, dass die Passivspur (9) nicht durchgehend, sondern nur stückweise am Boden angebracht ist, und in den Unterbrüchen von Fahrzeug extrapoliert wird. 9. Passivspur-Anordnung nach Anspruch 5, *dadurch gekennzeichnet*, dass der Strichcode (28) entsprechend der maximal zu erwartenden Spurabweichung breiter als die Passivspur (9) ausgebildet ist, und/oder mit kontrastverstärkendem, reflexionsarmem Hintergrund unterlegt ist.

10. Passivspur-Anordnung nach Anspruch 5, *dadurch gekennzeichnet*, dass der Strichcode (28) in Unterbrüchen der Passivspur (9) oder in den beidseits anschliessenden Bodenbereichen (11, 12) angeordnet ist.

11. Passivspur-Anordnung nach Anspruch 5, *dadurch gekennzeichnet*, dass der Strichcode (28) als selbstkorrigierender Code ausgebildet ist und Pendelungen bis 5 mm während des Lesevorganges toleriert sind.

12. Passivspur-Anordnung nach Anspruch 1, *dadurch gekennzeichnet*, dass Leseköpfe (14, 14') und (21) für die Passivspur (9) bzw. den Strichcode (28) vorgesehen sind, welche Teile einer integralen optischen Einheit bilden.

## Revendications

1. Equipement à trace passive pour guider et commander des unités de transport et de montage sans conducteur, une trace passive (9) étant prévue sur la trace de roulage sous la forme d'une ligne de guidage avec au moins une caractéristique distinctive (M) par rapport au reste de la trace de roulage (26) ainsi qu'un dispositif d'exploration monté sur le véhicule pour suivre la trace passive (9), le dispositif d'exploration présentant pour l'alignement continu au véhicule sur la trace une pluralité n de détecteurs de trace (SS$_1$, SS$_2$ ... SS$_n$) disposés, transversalement à l'axe longitudinal médian (7) avec un écartement mutuel (d) sur la face inférieure du véhicule, au moyen desquels on obtient un ensemble de valeurs réelles (f$_1$, f$_2$...f$_n$) de variables mesurées de la caractéristique (M), les détecteurs étant reliés à un dispositif d'interprétation de l'ensemble des valeurs réelles pour déterminer la position des détecteurs d'alignement par rapport à la ligne de guidage, le dispositif produisant des signaux de positions d'alignement pour une commande du véhicule, caractérisé en ce que le dispositif d'interprétation de l'ensemble des valeurs réelles (16) comporte un calculateur (17) avec mémoire de données, qui contient un ensemble de valeurs de consigne (s$_1$, s$_2$...s$_{2n}$) d'au moins 2n valeurs de la caractéristique (M) chacune de ces valeurs correspondant à la valeur de consigne de la variable mesurée dans une des 2n positions d'alignement qui sont parallèles à la trace passive (9) et des deux côtés de celle-ci dans le cadre des détecteurs de trace, en ce que le calculateur (17) est de plus prévu à cet effet pour combiner au moyen d'un circuit de corrélation les n valeurs réelles avec les 2n valeurs de consigne pour en tirer un signal pour la position de trace momentanée et en ce que suivant la piste de roulage, un des endroits déterminés, sur la trace de roulage sur ou près des marquages passifs (9), est prévu un code à barres qui sert de source d'information pour les fonctions de commande et qui est lisible au moyen d'un lecteur de code à barres (CS) monté sur la face inférieure du véhicule, le calculateur (17) et le-lecteur de code à barres (CS) étant reliés à la commande du véhicule qui contrôle l'unité de transport et de montage au moyen du signal de position de trace et du code à barres lu.

2. Equipement selon la revendication 1, caractérisé en ce que l'ensemble de valeurs de consigne (s$_1$, s$_2$...s$_{2n}$), associés aux positions d'alignement (SL$_1$, SL$_2$...SL$_{2n}$) est adapté aux données nominales du système et présente la valeur moyenne 0.

3. Equipement selon la revendication 1, caractérisé en ce que le calculateur (17) est prévu pour exécuter un algorithme d'alignement qui complète la fonction discrète de corrélation mutuelle $O_{fs}(\tau)$ dans la région de son maximum par une fonction continue en fournissant, à cet effet les valeurs de fonctions manquantes entre les valeurs d'appui par interpolation.

4. Equipement selon la revendication 1, caractérisé en ce que, pour chaque association d'un véhicule (FZ) et d'une section de parcours (36), est déterminé un facteur de qualité du système qui est associé par décision de majorité à des véhicules (FZ) distincts ou à des segments de parcours (36) distincts.

5. Equipement selon la revendication 1, caractérisé en ce que la caractéristique distinctive (M) est le coefficient de réflexion optique de la trace passive (9) et des deux zones du sol (11, 12) qui s'y raccordent de chaque côté.

6. Equipement selon la revendication 5, caractérisé en ce que la trace passive (9) est formée sur le sol par application à la brosse ou par projection, ou est constituée d'une bande métallique ou de matière plastique réfléchissante qui est collée et qui présente un coefficient de réflexion plus élevé que les deux zones du sol (11, 12) qui s'y raccordent de chaque côté.

7. Equipement selon la revendication 6, caractérisé en ce que la trace passive (9) a une largeur qui correspond au triple de l'écartement (d) entre les détecteurs d'alignement (SS$_1$...SS$_8$) ou les positions d'alignement (SL$_1$, SL$_2$...SL$_{16}$).

8. Equipement selon la revendication 5, caractérisé en ce que la trace passive (9) n'est pas formée de façon continue sur le sol, mais seulement par tronçons, et en ce qu'elle est extrapolée par le véhicule dans les interruptions.

9. Equipement selon la revendication 5, caractérisé en ce que le code à barres (28) est réalisé plus large que la trace passive (9), dans la mesure correspondant au désalignement maximal prévu, et/ou qu'un fond renforçant le contraste et à faible réflexion est prévu sous le code à barres.

10. Equipement selon la revendication 5, caractérisé en ce que le code à barres (28) est disposé dans des interruptions de la trace passive (9) ou dans les deux zones du sol (11, 12) qui s'y raccordent de chaque côté.

11. Equipement selon la revendication 6, caractérisé en ce que code à barres (28) est un code autocorrecteur et que des oscillations allant jusqu'à 5 mm sont tolérées pendant l'opération de lecture.

12. Equipement selon la revendication 1, caractérisé en ce que des têtes de lecture (14, 14' et 21) dont prévues pour la trace passive (9) ou le code à barres (28), lesquelles forment des parties d'une unité optique intégrale.

## Claims

1. A passive track system for guiding and controlling a driverless transport or assembly unit, respectively, where a passive track (9) placed on the roadway as guideline having at least one characteristic (M) differing from the rest of the roadway (26) and a vehicle-based sensing device for following the passive track (9) are provided, which sensing device includes a number n of track sensors (SS$_1$, SS$_2$...SS$_n$) at the underside of the vehicle transversely to the longitudinal axis (7) of the vehicle at a mutual spacing (d) for a continuous track guidance of the vehicle, by means of which a reference value set (f$_1$, f$_2$...f$_n$) of reference values of the characteristic (M) is detectable and where the sensors are connected to a device for the analysation of the actual value set for a determination of the position of the track sensors relative to the guideline which produces track position signals for a control system of the vehicle, characterized in that the device (16) for the analysation of the actual value set includes a processor (17) having a data memory which contains a reference value set (S$_1$, S$_2$...S$_{2n}$) of at least 2n-values of the characteristic (M), whereby every one of these values corresponds to the design value of the reference value in one of 2n-track trails (SL$_1$, SL$_2$...SL$_{2n}$) extending parallel to the passive track (9) and at both sides of same in the pattern of the track sensors, that the processor (17) is designed further to combine the n actual values with the 2n design values by means of a cross-correlation in order to produce a signal for the instant track position and in that a bar code (28) is arranged on the roadway in or aside of the passive track (9) at predetermined positions along the roadway, which bar code serves as source of information for the controlling function and is readable by means of a bar code sensor (CS) located at the underside of the vehicle, which processor (17) and which bar code sensor (CS) are connected to the vehicle control system which controls the transport or assembly unit, respectively, based on the track position signal and the sensed bar code.

2. A passive track system according to claim 1, characterized in that the reference value set (S$_1$, S$_2$...S$_{2n}$) corresponding to the track trails (SL$_1$, S$_2$...S$_{2n}$) is correlated to the nominal data of the passive track system and has a mean value of 0.

3. A passive track system according to claim 1, characterized in that the processor (17) is arranged to conduct a track guide algorithm which completes the discreet cross-correlation function $\Phi_{fs}(\tau)$ in the zone of its maximum value to a continuous function and determines thereto the missing function values between the discreet values by interpolation.

4. A passive track system according to claim 1, characterized in that a quality factor of the passive track system is determined for each correlation between vehicle (FZ) and travel zone (36) which is allocated to individual vehicles (FZ) or individual travel zones (36) by a majority decision.

5. A passive track system according to claim 1, characterized in that the differentiating characteristic (M) comprises an optical coefficient of reflection of the passive track (9) and of surface regions (11, 12) located at both sides adjacent to the passive track (9).

6. A passive track system according to claim 5, characterized in that the passive track (9) is placed on the floor surface by a brush-painting or spray-painting, or consists of a reflecting metal or synthetic tape and which has agreater coefficient of reflection than the surface regions (11, 12) located at both sides adjacent to the passive track.

7. A passive track system according to claim 6, characterized in that the passive track (9) has a width that is three times the mutual spacing (d) of the track sensors (SS$_1$...SS$_8$) or trail positions (SL$_1$, SL$_2$...SL$_{16}$), respectively.

8. A passive track system according to claim 5, characterized in that the passive track (9) is not placed continuous but rather only in discreet parts onto the floor surface and is extrapolated by the vehicle at the intervening gaps.

9. A passive track system according to claim 5, characterized in that the bar code (28) is designed broader than the passive track (9) corresponding to the maximal expectable deviation from the guideline and/or is provided with a contrast-enhancing low reflective background finish.

10. A passive track system according to claim 5, characterized in that the bar code (28) is located in gaps present in the passive track (9) or in the adjacent surface regions (11, 12) at both sides thereof.

11. A passive track system according to claim 5, characterized in that the bar code (28) is formed as selfcorrecting code and capable of tolerating oscillations of up to 5 mm during the reading operation.

12. A passive track system according to claim 1, characterized in that reading heads (14, 14') and (21) are provided for the passive track (9) or bar code (28), respectively, which form parts of an integral optical unit.

# EP 0 195 191 B1

# Fig.1

# Fig.4

| Fahrstrecken-Abs. Nr. | Qualitätsfaktoren, gemessen von den Fahrzeugen | | | | |
|---|---|---|---|---|---|
| | Nr. 1 | Nr. 2 | Nr. 3 | Nr. 4 | Nr. 5 |
| 1 | 155 | 120 | 193 | 45 | 107 |
| 2 | 55 | 67 | 83 | 33 | 71 |
| 3 | 125 | 102 | 160 | 54 | 95 |
| 4 | 187 | 151 | 210 | 63 | 120 |
| 5 | 201 | 168 | 224 | 82 | 131 |
| 6 | 190 | 152 | 211 | 74 | 125 |
| 7 | 161 | 129 | 199 | 41 | 115 |
| 8 | 134 | 110 | 161 | 59 | 99 |

1

# Fig.2a

# Fig.2b

# Fig. 3a

# Fig. 3b

# Fig. 5

# Fig.6